# EUROPEAN PATENT SPECIFICATION

(11) **EP 0 858 656 B1**
(45) Date of publication and mention of the grant of the patent: **02.06.2004**
(21) Application number: 97941154.3
(22) Date of filing: 05.09.1997
(51) Int. Cl.: G11B 7/24, G11B 7/26, B29C 45/26, B29C 45/56, B29L 17/00, B29D 17/00

(54) **METHOD OF INJECTION MOLDING OF COMPACT DISCS**
VERFAHREN ZUM SPRITZGIESSEN VON COMPACT DISCS
PROCEDE DE MOULAGE PAR INJECTION DE DISQUES COMPACTS

(30) Priority: 05.09.1996 US 707618
(43) Date of publication of application: 19.08.1998
(73) Proprietor: WEA Manufacturing, Inc., Olyphant, PA 18447 (US)
(72) Inventor: MUELLER, William, Clarks Summit, PA 18411 (US); PICKUTOSKI, Edward, Olyphant, PA 18447 (US)
(74) Representative: Godwin, Edgar James
(86) International application number: PCT/IB1997/001214
(87) International publication number: WO 1998/010417

(56) References cited:
- JP-A- 5 205 323
- JP-A- 5 205 324
- JP-A- 8 066 945
- US-A- 4 707 321
- US-A- 4 849 151
- US-A- 4 879 082
- US-A- 4 979 891
- US-A- 5 015 426
- US-A- 5 044 925
- US-A- 5 068 065
- US-A- 5 451 363
- US-A- 5 552 094

## Description

### Field Of The Invention

This invention relates to methods for the manufacture of compact discs by injection molding processes.

### Background Of The Invention

The invention is concerned with injection molding of 0.6 mm thick optical discs. More specifically an injection molding machine operating under a unique process is utilized to produce 0.6 mm optical discs suitable for lamination to either blank or information side discs.

Injection molding methods and apparatus are known in the art. Injection molding can be generally described as a replication process in which a molten material (usually a polymer) is injected into a cavity and after cooling forms the geometry of the cavity. Injection molding has been used for the mass production of 1.2 mm thick optical discs.

Based on inadequate quality of the resultant product and their slow cycle time the techniques used for mass production by injection molding of 1.2 mm optical discs are not suitable for 0.6 mm discs. The quality requirements for such discs may be expressed in terms of the tilt of the disc (viz. its deviation from planarity), the jitter (viz. the standard deviation of the pit lengths from their predetermined values), and its birefringence (viz. the stress induced property of polymers to split an incident light beam depending upon its direction through the polymer).

US-A-4 707 321 discloses a process for forming a disc such as a video disc or a DRAW disc by injection molding. A melted plastic material, such as a polycarbonate, is injected into a cavity formed between the faces of a movable die and a stationary die under substantially no pressure. During or after injection, the plastic material is pressed by the movable die against the stationary die so as to press-mold the disc.

The present invention provides a process for the injection molding of a compact disc, as set forth in claim 1.

### Brief Description Of The Invention

Variations of the injection molding process are used in the replication of optical discs such as CD audio, CD ROM and laser discs. The processes used are suitable because these optical disc formats are all of a 1.2 mm or greater thickness.

A new 0.6 mm optical disc has been developed which offers several advantages over the 1.2 mm format, particularly in the field of high data density optical discs in which data is recorded in a spiral track of alternating pits and lands. Laser light returned to a reading head by such pits and lands is viewed through an optically flat side of the optical disc. Some bending of the light received from a pit or land occurs at the surface of the polycabonate surface of the optical disc. A thinner optical disc enables the reading laser to employ a smaller spit size and the lenses of the reading head to have a higher numerical aperture when used to readout a pattern of pits and lands. The readout the data from such thinner optical discs uses laser light with a smaller wavelength than was used for the 1.2 mm discs. This has entailed a wavelength change from 780 nm to approximately 650 nm or less. Thus, the readout of a higher density of pits and lands, and therefore of more data per disc, is possible with the thinner optical discs. The typical improvement is from 650 mega-bits of data to a 5 giga-bits.

A key feature of the present invention is a method for the injection of molding of compact discs at the very small thickness of 0.6mm. In particular it has been discovered that the requirements of such discs in terms of their planarity, birefringence, and jitter can be met by a critical sequence of steps during and after the injection of molten plastic into the mold cavity, including allowing the injected plastic to force the mold cavity to partly reopen for a predetermined time (or distance) before closing the mold to its final dimensions.

### Brief Description Of The Drawings

Fig. 1a-1d is a schematic drawing of the mold chamber of an injection molding machine during the different stages of the process of the present invention.
Fig. 2 is a graph of the injection molding machine parameters, i.e. mold position, screw position, and clamp pressure during the preferred process of the present invention.
Fig. 3a-b is a graph of a graph of an unacceptable alternative set of parameters demonstrating the criticality of the present invention.

### Detailed Description Of A Preferred Embodiment

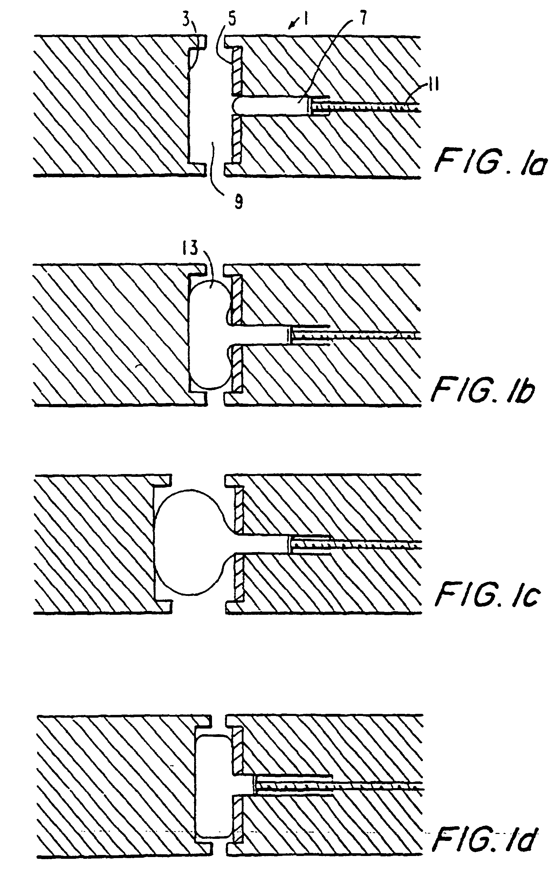

The process for injection molding of 0.6 mm discs from can be described in four steps performed on a commercial plastics injection molding machine where the plastic is an optical grade polycarbonate. As shown in Fig. 1, the mold 1 is a cavity one face of which 3 is optically flat, and the other face 5 is a nickel impression of a compact disc. A channel 7 is filled with a molten polycarbonate which is driven into the chamber 9 of the mold by an advancing screw 11. The faces of the mold, 3 and 5 may be moved closer together by a driving mechanism (not shown). The dimensions of the mold are exaggerated in Fig. 1a-1d. The typical diameter of the face 5 is 120 mm, while the mold opening 9 has an separation of the faces of less than 1600 µm. The polycarbonate 13 is not forced into the mold cavity until the mold cavity reaches an interim position, at which point, as shown in Fig. 1b, the molten polymer 13 is injected into the mold cavity by an injection force due to the advance of the screw 11.

As the injection force exceeds the closing force, the mold cavity is opened slightly, as shown in Fig. 1c.

As the closing force exceeds the opening force, the closing of the cavity is brought to the final dimension as in Fig. 1d.

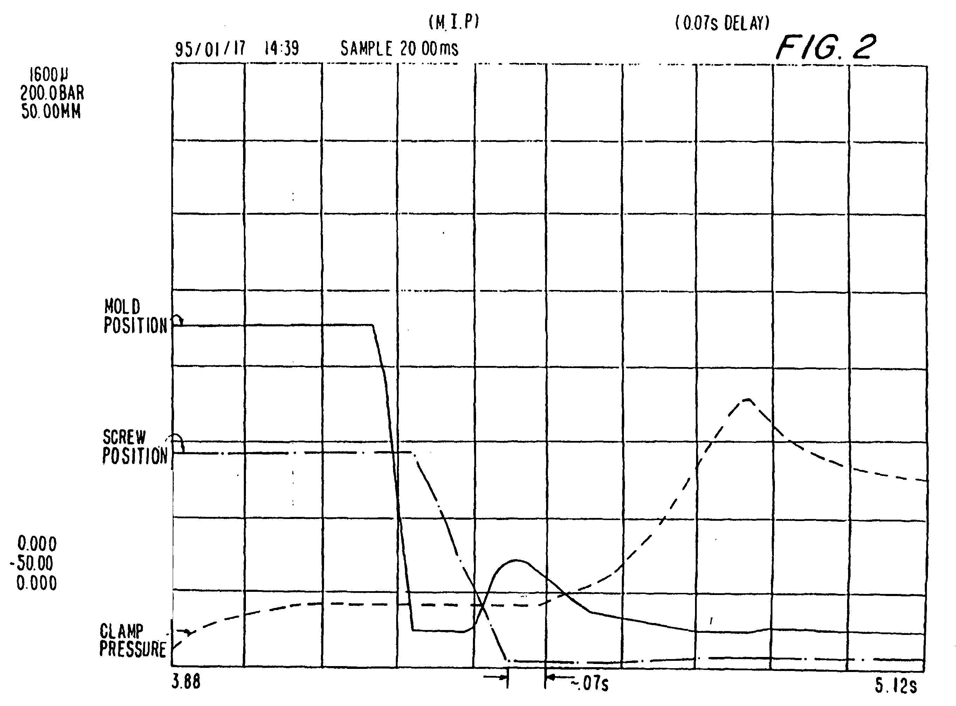

It has been discovered that a particular set of parameters guiding the injection process are particularly suited to the production of a 0.6 mm compact disc having less than about 0.6 degrees of tilt and sufficiently minimal deviation in pit lengths (jitter). In particular, the preferred embodiment of this invention for a disc having a radius of approximately 60 mm is as follows, as depicted in Figure 2.

The mold is open 900 µm. It is then closed to an interim position of 100 µm and injection of the polymer is begun. Before the full charge of polymer is injected, the injection pressure exceeds the clamp pressure and the mold begins to open. When the injection is completed, and during the next 0.07 seconds, the mold continues to be forced open to 300 µm and then begins to close. At the end of the positive 0.07 seconds delay the mold is clamped with full force.

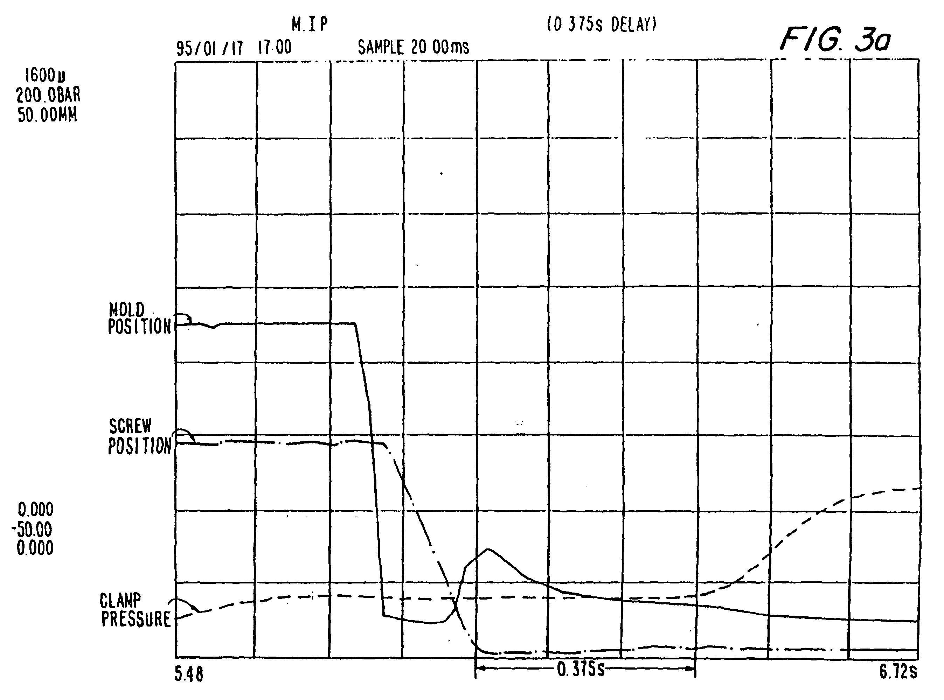

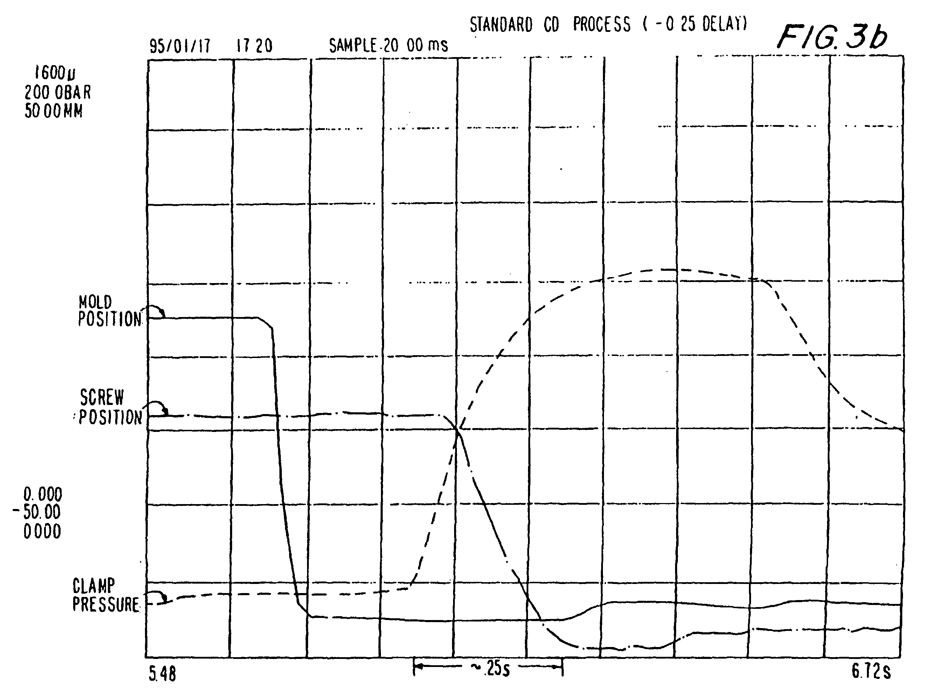

In order to demonstrate the criticality of these parameter values, Figures 3a and 3b show the result of delays of positive 0.375 seconds and negative 0.25 seconds, respectively, both of which result in unplayable discs emerging from the injection molding process.

While there have been shown and described and pointed out the fundamental novel features of the invention as applied to preferred embodiments thereof, it will be understood that various omissions and substitutions and changes in the form and details of the device illustrated and in its operation may be made by those skilled in the art without departing from the scope of the claims.

## Claims

1. A process for the injection molding of a compact disc made from a polymer and having a thickness no greater than 0.6 mm comprising:
opening the mold;
closing the mold to an interim position in which the distance between the two faces of the mold is 100 µm and commencing the injection of the polymer, such that before the full charge of polymer is injected, the injection pressure exceeds the clamp pressure and the mold begins to open;
delaying the compression of the mold for 0.07 seconds, during which the mold continues to be forced open to 300 µm and then begins to close; and
clamping the mold with full force.

## Patentansprüche

1. Verfahren zum Spritzgießen einer CD, hergestellt aus einem Polymer und mit einer Dicke von nicht mehr als 0,6 mm, das folgendes umfaßt:
die Form zu öffnen,
die Form bis zu einer Zwischenposition zu schließen, in welcher der Abstand zwischen den zwei Seiten der Form 100 µm beträgt, und das Einspritzen des Polymers zu beginnen, so daß der Einspritzdruck den Klemmdruck übersteigt, bevor die volle Polymercharge eingespritzt ist, und die Form sich zu öffnen beginnt,
das Zusammendrücken der Form um 0,07 Sekunden zu verzögern, während derer die Form weiter bis zu 300 µm aufgedrückt wird und sich danach zu schließen beginnt, und
die Form mit voller Kraft zu verschließen.

## Revendications

1. Procédé de moulage par injection d'un disque compact réalisé à partir d'un polymère et présentant une épaisseur inférieure à 0,6 mm, comprenant les étapes consistant à:
ouvrir le moule;
fermer le moule à une position intermédiaire dans laquelle la distance entre les deux faces du moule est de 100 µm et commencer l'injection du polymère, de sorte qu'avant l'injection de la charge complète de polymère, la pression d'injection dépasse la pression de serrage et le moule commence à s'ouvrir;
retarder la compression du moule pendant 0,07 seconde, durée pendant laquelle le moule continue de s'ouvrir de manière forcée à 300 µm et commence ensuite à se fermer; et
serrer le moule avec la force totale.
